# EUROPÄISCHE PATENTSCHRIFT

(11) **EP 1 069 344 B1**
(45) Veröffentlichungstag und Bekanntmachung des Hinweises auf die Patenterteilung: **10.12.2003**
(21) Anmeldenummer: 99113794.4
(22) Anmeldetag: 14.07.1999
(51) Int. Cl.: F16G 13/06

(54) **Laschenketten mit verschleissarmen Kettengelenken**
Side-bar chains with wear-resistant articulations
Chaînes à maillons en plaques à articulations à faible usure

(43) Veröffentlichungstag der Anmeldung: 17.01.2001
(73) Patentinhaber: JOH. WINKLHOFER & SÖHNE GmbH & Co KG, D-81369 München (DE)
(72) Erfinder: Winklhofer, Gerhard, 82152 Krailling (DE)
(74) Vertreter: Grünecker, Kinkeldey, Stockmair & Schwanhäusser Anwaltssozietät

(56) Entgegenhaltungen:
- DE-A- 4 235 198
- FR-A- 1 011 332
- US-A- 1 945 357
- US-A- 3 324 737
- US-A- 5 140 806

## Beschreibung

Die vorliegende Erfindung betrifft Laschenketten mit an als Gleitlager ausgebildeten Gelenkstellen miteinander verbundenen Außen- und Innenkettengliedern, wobei jede Gelenkstelle von einer Hülse des Innenkettengliedes und einem sich in der Hülse im wesentlichen um seine Achse drehbaren Stiftbolzen des Außenkettengliedes gebildet ist.

Bei der einfachsten Form der Laschenkette besteht das Innenkettenglied aus zwei parallelen Innenlaschen, die durch zwei parallel zueinander und senkrecht zu den Laschenketten angeordneten Hülsen miteinander verbunden sind. Das Außenkettenglied besteht aus parallel zueinander angeordneten Außenlaschen, die mittels zwei parallel zueinander und senkrecht zu den Außenlaschen angeordneten Stiftbolzen verbunden sind. Die Kettengelenke werden jeweils durch eine Hülse des Innenkettengliedes und einen sich durch die Hülse erstreckenden Stiftbolzen des Außenkettengliedes gebildet. Sowohl die Innenfläche der Hülse als auch die Außenfläche des Stiftbolzens sind zylindermantelförmig ausgestaltet, so daß sie nach Art eines Gleitlagers funktionieren, indem der Stiftbolzen um seine Achse in der Hülse verschwenkbar ist. Damit die Gelenkstellen ausreichend gut funktionieren, sind der Stiftbolzen und die Hülse mit einem geeigneten Spiel zueinander gefügt. Aufgrund von Fertigungsungenauigkeiten und des erwähnten Spiels kommt es jedoch insbesondere auf den die Kräfte übertragenden Zugseiten von Stiftbolzen und Hülse zu erhöhtem Verschleiß.

Um einen solchen Verschleiß zu verringern sind u.a. auch Ketten mit Rollagern (rockerjoint) wie z.B. in der DE 4235198 A1 bekannt geworden. Bei diesen Ketten rollt der Stiftbolzen über einen konvexen Vorsprung in der Hülse ab, so daß keine Gleitbewegung wie bei einem Gleitlager, sondern eine Rollbewegung stattfindet. Solche Rollager gibt es auch mit zwei aufeinander abrollenden Stiftbolzen. Diese Art von Ketten mit Rollagern sind jedoch nicht Gegenstand der vorliegenden Erfindung. Vielmehr soll eine Laschenkette mit einfachen, als Gleitlager ausgebildeten Gelenkstellen verbessert werden.

Der Erfindung liegt daher die Aufgabe zugrunde, eine Laschenkette der eingangs genannten Art bezüglich ihres Verschleißverhaltens zu verbessern.

Diese Aufgabe wird erfindungsgemäß dadurch gelöst, daß zumindest ein Bereich der Mantelfläche des Stiftbolzens und ein zugeordneter Bereich der Innenfläche der Hülse auf der Zugseite eine voneinander abweichende Umfangskontur aufweisen derart, daß an mindestens zwei am Umfang voneinander beabstandeten Berührpunkten bzw. -linien auf der Zugseite ein Abstützen des Stiftbolzens an der Hülse erfolgt.

Demnach wird durch eine solche Ausgestaltung die Hertzsche Pressung auf der Zugseite bei Zugbelastung an den Berührflächen herabgesetzt, da die Anzahl der Berührstellen gegenüber herkömmlichen Laschenketten zumindest verdoppelt ist. Die Kraft kann entsprechend verteilt übertragen werden. Bislang lag bei herkömmlichen Laschenketten immer eine Linienberührung im Bereich der Kraftübertragung zwischen Stiftbolzen und Hülse vor, so daß entsprechend höherer Verschleiß auftrat. Unter dem Begriff Zugseite sind jeweils die einander zugewandten Seitenbereiche der Innenfläche der Hülse und der Außenfläche des zugehörigen Stiftbolzens, die bei Zugbelastung an der Kette die Kräfte übertragen gemeint. Die Übertragung der Kräfte erfolgt bei gerade gespannter Kette in und entgegen der Laufrichtung.

Ergänzend sei noch darauf hingewiesen, daß unter dem Begriff "abweichende Umfangskontur" nicht die üblichen, bei der Herstellung vorhandenen Abweichungen durch Herstellungsungenauigkeit und das zwischen Stiftbolzen und Hülse vorhandene Spiel gemeint ist. Vielmehr ist eine bewußt erzeugte abweichende Umfangskontur gemeint.

Günstigerweise kann dies derart erfolgen, daß der Stiftbolzen einen im wesentlichen kreisförmigen Querschnitt aufweist und die Hülse einen daran angepaßten im wesentlichen kreisförmigen Innenquerschnitt aufweist, wobei zusätzlich auf der Zugseite mindestens eine Einbuchtung in der Mantelfläche des Stiftbolzens und/oder der Innenfläche der Hülse vorgesehen sind. Hiermit ist beabsichtigt, so wenig wie möglich von einem kreisförmigen Querschnitt sowohl der Innenkontur der Hülse als auch der Außenkontur des Stiftbolzens abzuweichen. Hierdurch wird lediglich an der dafür notwendigen Stelle, d.h. im Bereich der Zugseiten mindestens eine entsprechende Einbuchtung vorgesehen. Jede Einbuchtung weist Ränder auf, die dann wiederum im Belastungsfall als Abstützpunkte bzw. -linien für das jeweilige Gegenelement dienen. Solche Einbuchtungen können aber auch durch Deformation der Hülse im Zugseitenbereich erzeugt werden.

Damit eine möglichst gezielte Abstützung über einen großen Bereich der Hülse bzw. des Stiftbolzens möglich sind, ist gemäß einer weiteren Variante vorgesehen, daß die Innenfläche der Hülse auf der Zugseite eine achsparallele Gelenkmulde aufweist, deren im wesentlichen voneinander beabstandeten Seitenränder zwei voneinander beabstandete Berührlinien für den zugehörigen Stiftbolzen definieren. Durch die achsparallele Führung der Gelenkmulde können die Kräfte sehr gleichmäßig übertragen werden, wodurch die Kontur der Seitenränder der Gelenkmulde entsprechend ausgestaltet werden können.

Damit diese Wirkung auch in den von den Innenlaschen der Innenkettenglieder versteiften Endabschnitte der in diese eingepreßten Hülsen erfolgt, kann sich die Gelenkmulde über die gesamte Länge der Hülse erstrecken.

Eine besonders einfach herzustellende Variante wird in diesem Zusammenhang dadurch erzeugt, daß die Seitenränder der Gelenkmulde parallel zueinander verlaufen. Hierbei handelt es sich dann um eine symmetrisch aufgebaute Gelenkmulde, die sich über die gesamte Länge der Hülse erstrecken kann.

Das Einbringen der Gelenkmulde kann in Achsrichtung der Hülse erfolgen.

Um möglichst geringe Kerbspannungen zu erhalten und die Hülsenwand nicht nachhaltig zu schwächen, kann weiter vorgesehen werden, daß die Gelenkmulde einen kreissegmentförmigen (oder sichelförmigen) Querschnitt aufweist. Bevorzugt ist der Radius des Kreissegments kleiner als der Radius des Stiftbolzens, so daß nach einigem Verschleiß der Ränder der Gelenkmulden noch immer eine positive Wirkung vorhanden ist.

Damit dieser von einer Gelenkmulde ausgehende positive Effekt erreicht werden kann, ist es vollkommen ausreichend, wenn diese nur eine geringe Tiefe aufweist. Diese kann zwischen einschließlich 5 µm und 25 µm betragen und weist bei einer bevorzugten Ausführungsform eine Tiefe von 10 µm auf.

Um eine möglichst geringe Schwächung der Wandstärke der Hülse zu erzielen, werden in den meisten Fällen relativ große Radien zur Ausgestaltung der Gelenkmulde verwendet, die dennoch kleiner sind als der Radius des Stiftbolzens. Gerade auch in diesem Zusammenhang ist eine Variante günstig, bei der die Seitenränder der Gelenkmulde bezüglich der Achse der Hülse in einen Winkel von 90° bis 160°, bevorzugt 140°, zueinander angeordnet sind. Hierdurch wird auch im Bereich des Umlenkens der Laschenkette, z.B. an einem Kettenrad, eine sehr gute Gleitlagerwirkung durch die zwei Berührstellen erzielt, auch wenn in diesem Bereich die Kräfte nicht mehr exakt in Längserstreckung der Kettenglieder in diese eingeleitet werden.

Bevorzugt kann die Gelenkmulde symmetrisch zur Hauptzugrichtung der Kette an der Zugseite angeordnet sein. Dies bietet zum einen bei gerade gespannter Kette die optimale Übertragung der Kräfte, sorgt jedoch auch bei Umlenken sowohl in der einen als auch in der anderen Richtung jeweils für eine ausreichende Abstützung und gute Gleitlagereigenschaft.

Die Erfindung bezieht sich auch auf ein Verfahren zum Herstellen von Teilen einer Laschenkette nach einem der Ansprüche 1 bis 9. Bei diesem Verfahren wird mittels eines Rollvorgangs aus einem Blechmaterial eine Hülse gewickelt und auf der Zugseite der Hülse eine Gelenkmulde eingearbeitet. Günstigerweise kann das Einarbeiten der Gelenkmulde nachfolgend dem Rollvorgang geschehen, so daß eine Vororientierung der Hülse stattfinden kann. Dies kann günstigerweise dadurch geschehen, daß das Einarbeiten der Gelenkmulde nach dem Fügen eines Innenkettengliedes erfolgt. Bei dem gefügten Innenkettenglied weisen die Hülsen bereits die entsprechende Ausrichtung auf, so daß die Zugseiten sehr leicht ausfindig zu machen sind. Ein Ausrichten von bereits mit einer Gelenkmulde versehenden Hülsen zum Fügen eines Innenkettengliedes kann hierdurch entfallen, was ansonsten mit erheblichen fügetechnischen Problemen behaftet wäre.

Das Einarbeiten der Gelenkmulde erfolgt gemäß einer Variante mittels eines in die Hülse einfahrbaren Ziehstempels. Z.B. können die Innenkettengliederrohlinge in eine entsprechende Station gefahren und dann durch einfahrende Ziehstempel die Gelenkmulden erzeugt werden. Dies ist ein sehr einfacher Arbeitsschritt und erfordert keine sehr teuren und umständlichen Vorrichtungen oder Verfahrensschritte.

Im folgenden wird ein Ausführungsbeispiel der vorliegenden Erfindung anhand einer Zeichnung näher erläutert. Es zeigen:
- Fig. 1: einen Ausschnitt einer Laschenkette in einer Draufsicht,
- Fig. 2: ein Innenkettenglied der Kette aus Fig. 1 in einer vergrößerten perspektivischen Seitenansicht,
- Fig. 3: eine Vorderansicht einer Hülse des Innenkettenglieds aus Fig. 2 in vergrößerter Darstellung und
- Fig. 4: einen Vollschnitt durch ein Kettengelenk in vergrößerter Darstellung.

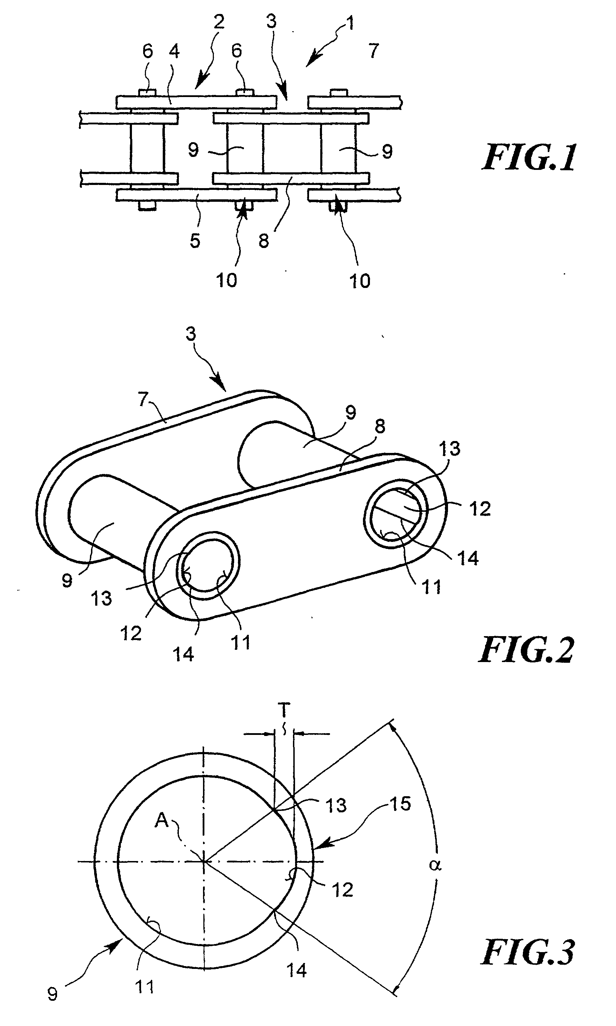

Die in Fig. 1 dargestellte Laschenkette 1 umfaßt abwechselnd aneinander angeordnete Außenkettenglieder 2 und Innenkettenglieder 3.

Ein Außenkettenglied 2 besteht bei der dargestellten Kette aus zwei parallel zueinander angeordneten Außenlaschen 4 und 5 aus Stahlblech, die jeweils auf die Endbereiche von zwei parallel zueinander angeordneten, senkrecht zu den Außenlaschen 4 und 5 verlaufenden Stiftbolzen 6 aufgepreßt sind.

Die Innenkettenglieder bestehen jeweils aus zwei parallel zueinander angeordneten Innenlaschen 7 und 8 aus Stahlbelch und zwei parallel zueinander und senkrecht zu den Innenlaschen 7 und 8 angeordneten Hülsen 9. Die Hülsen 9 sind in die Innenlaschen 7,8 eingepreßt. Die Laschen der Außen- und Innenkettenglieder 2,3 sind jeweils parallel zueinander angeordnet, wobei die Innenkettenglieder 3 innerhalb der Außenlaschen 4 der Außenkettenglieder 2 positioniert sind. Jeweils ein Stiftbolzen 6 des Außenkettengliedes erstreckt sich durch die Öffnung der Hülse 9 des Innenkettengliedes 3, so daß Kettengelenke 10 gebildet sind. Die Stiftbolzen 6 weisen eine Zylinderform mit entsprechend kreisförmigem Querschnitt und die Hülsen 9 sind zylinderrohrfömrig mit im wesentlichen kreisförmigem Querschnitt ausgestaltet. Allerdings weist die Innenfläche 11 der Hülsen 9 eine Abweichung von einer Zylindermantelfläche auf.

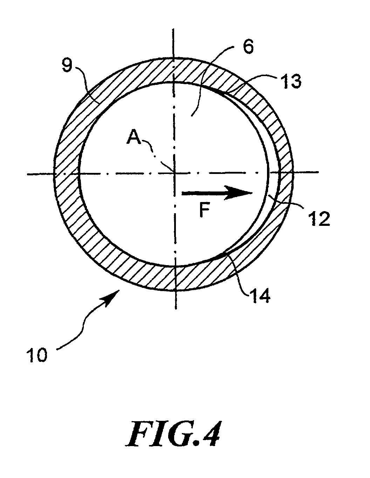

Diese Abweichung ist sehr gut in den Fig. 2 und 3 zu erkennen. Bei der dargestellten Ausführungsform handelt es sich dabei um eine parallel zur Hülsenachse verlaufende Gelenkmulde 12 von im wesentlichen gleichmäßiger Breite. Die Gelenkmulde 12 ist von zwei parallel zueinander und parallel zur Hülsenachse verlaufenden Muldenrändern 13 und 14 begrenzt. Die Gelenkmulde 12 der Hülse 9 eines Innenkettengliedes 3 weist jeweils von einer senkrecht zu der Kettenlängsrichtung verlaufenden und mittig zum Innenkettenglied 3 angeordneten Ebene weg. Das bedeutet aber auch, daß die Gelenkmulden 12 der beiden Hülsen 9 eines Innenkettengliedes 3 voneinander wegweisen bzw. jeweils in Richtung der Endbereiche der Innenkettenglieder 3 angeordnet sind. Hierdurch ist die Gelenkmulde 12 auf der Zugseite 15 der Hülse 9 angeordnet. Die Zugseite 15 ist diejenige Seite, die bei Zugbelastung an der Kette die durch den zugehörigen Stiftbolzen 6 ausgeübte Kraft aufnehmen muß. In der Fig. 4 ist die Kraftrichtung F symbolisch eingezeichnet.

Die in der Fig. 3 dargestellte Tiefe T der Gelenkmulde 12, die von dem Muldenrand 13 bzw. 14 zum Grund der Gelenkmulde 12 gemessen wird, beträgt in aller Regel ca. 10 µm. Die Querschnittsform der Gelenkmulde 12 ist im wesentlichen kreissegmentförmig, um möglichst die Wandstärke der Gelenkhülse nicht zu schwächen. Der von den Muldenrändern 13 und 14 bezüglich der Mittenachse A der Hülse aufgespannte Winkel α beträgt im vorliegenden Fall ca. 90°. Andere Winkel, insbesondere im Bereich von 130° bis 150°, können für bestimmte Anwendungsfälle bevorzugt werden.

Die Fig. 4 zeigt nunmehr den in der Hülse 9 angeordneten Stiftbolzen 6, so daß ein Querschnitt durch das Kettengelenk 10 gezeigt ist. Die Öffnung der Hülse 9 und der Stiftbolzen 6 sind im wesentlichen koaxial zur Achse A des Gelenks angeordnet und der Stiftbolzen 6 kann nach Art eines Gleitlagers innerhalb der Hülsenöffnung rotieren bzw. über einen bestimmten Schwenkweg verschwenken. Da der Stiftbolzen 6 eine zylindermantelförmige Oberfläche aufweist, kommt er bei einer Zugbelastung im wesentlichen im Bereich der Muldenränder 13 und 14 zur Anlage, so daß an diesen Stellen die Kraft von dem Stiftbolzen 6 auf die Gelenkhülse 9 übertragen wird. Der Bereich zwischen den Muldenrändern 13,14 steht dabei nicht in Berührung mit der Stiftbolzenoberfläche. Hierdurch sind im wesentlichen zwei ganz genau vorgegebene Berührungslinien im Belastungsfall definiert, so daß sich die Kraft gleichmäßig verteilt und zu hohe Pressungen im Gelenk 10 nicht auftreten.

Bei weiteren Ausführungsformen wäre es auch denkbar, die Innenfläche 11 der Hülse 9 zylindermantelförmig zu belassen und den Stiftbolzen 6 mit einer entsprechenden Kontur zu versehen. Beim Stiftbolzen 6 würde es ausreichen, auf der Zugseite eine Art Schlüsselfläche anzubringen. Aber auch Einbuchtungen jeglicher Form mit abgerundeten Rändern sind möglich.

## Patentansprüche

1. Laschenkette mit an als Gleitlager ausgebildeten Gelenkstellen (10) miteinander verbundenen Außen- und Innenkettengliedern (2,3), wobei jede Gelenkstelle (10) von einer Hülse (9) des Innenkettengliedes (3) und einem sich in der Hülse (9) im wesentlichen um seine Achse (A) drehenden Stiftbolzen (6) des Außenkettengliedes (2) gebildet ist, **dadurch gekennzeichnet, daß** zumindest ein Bereich der Mantelfläche des Stiftbolzens (6) und ein zugeordneter Bereich der Innenfläche (11) der Hülse (9) auf der Zugseite (15) eine voneinander abweichende Umfangskontur aufweisen derart, daß an mindestens zwei am Umfang vorneinander beabstandeten Berührpunkten bzw. -linien auf der Zugseite (15) ein Abstützen des Stiftbolzens (6) an der Hülse (9) erfolgt.

2. Laschenkette nach Anspruch 1, **dadurch gekennzeichnet, daß** der Stiftbolzen (6) einen im wesentlichen kreisförmigen Querschnitt aufweist und die Hülse (9) einen daran angepaßten im wesentlichen kreisförmigen Innenquerschnitt aufweist, wobei zusätzlich auf der Zugseite (15) mindestens eine Einbuchtung in der Mantelfläche des Stiftbolzens (6) und/oder der Innenfläche (11) der Hülse (9) vorgesehen sind.

3. Laschenkette nach Anspruch 1 oder 2, **dadurch gekennzeichnet, daß** die Innenfläche (11) der Hülse (9) auf der Zugseite (15) eine achsparallele Gelenkmulde (12) aufweist, deren im wesentlichen voneinander beabstandeten Seitenränder (13,14) zwei voneinander beabstandete Berührlinien für den zugehörigen Stiftbolzen (6) definieren.

4. Laschenkette nach Anspruch 3, **dadurch gekennzeichnet, daß** die Gelenkmulde (12) sich über die gesamte Länge der Hülse (9) erstreckt.

5. Laschenkette nach Anspruch 3 oder 4, **dadurch gekennzeichnet, daß** die Seitenränder (13,14) der Gelenkmulde (12) parallel zueinander verlaufen.

6. Laschenkette nach Anspruch 3 bis 5, **dadurch gekennzeichnet, daß** die Gelenkmulde (12) einen kreissegmentförmigen Querschnitt aufweist.

7. Laschenkette nach Anspruch 3 bis 6, **dadurch gekennzeichnet, daß** die Gelenkmulde (12) eine Tiefe (T) von 5 µm bis 25 µm, bevorzugt ca. 10 µm,aufweist.

8. Laschenkette nach einem der Ansprüche 3 bis 7, **dadurch gekennzeichnet, daß** die Seitenränder (13,14) der Gelenkmulde (12) bezüglich der Achse (A) der Hülse (9) in einem Winkel (a) von 90° bis 160°, bevorzugt ca. 140°, zueinander angeordnet sind.

9. Laschenkette nach einem der Ansprüche 3 bis 8, **dadurch gekennzeichnet, daß** die Gelenkmulde (12) symmetrisch zur Hauptzugrichtung der Kette an der Zugseite (15) angeordnet ist.

10. Verfahren zum Herstellen einer Laschenkette (1) nach einem der Ansprüche 1 bis 9, bei dem mittels eines Rollvorgangs aus einem Blechmaterial eine Hülse (9) gewickelt wird und auf der Zugseite (15) der Hülse (9) eine Gelenkmulde (12) eingearbeitet wird.

11. Verfahren nach Anspruch 10, **dadurch gekennzeichnet, daß** das Einarbeiten der Gelenkmulde (12) nach dem Fügen eines Innenkettengliedes (3) erfolgt.

12. Verfahren nach Anspruch 10 oder 11, **dadurch gekennzeichnet, daß** das Einarbeiten der Gelenkmulde (12) mittels eines in die Hülse (9) einfahrbaren Ziehstempels erfolgt.

## Claims

1. A plate chain comprising outer and inner chain links (2, 3) which are interconnected at joint places (10) formed as slide bearings, each of said joint places (10) being formed by a sleeve (9) of the inner chain link (3) and by a pin bolt (6) of the outer chain link (2) which in the sleeve (9) substantially rotates about its own axis (A), **characterized in that** at least one portion of the lateral surface of the pin bolt (6) and an associated portion of the inner surface (11) of the sleeve (9) have different circumferential contours at the pulling side (15) in such a way that the pin bolt (6) is supported on the sleeve (9) at at least two circumferentially spaced-apart points or lines of contact at the pulling side (15).

2. The plate chain according to claim 1, **characterized in that** the pin bolt (6) has a substantially circular cross-section and the sleeve (9) has a substantially circular inner cross-section adapted thereto, at least one indentation being additionally provided at the pulling side (15) in the lateral surface of the pin bolt (6) and/or the inner surface (11) of the sleeve (9).

3. The plate chain according to claim 1 or 2, **characterized in that** the inner surface (11) of the sleeve is provided at the pulling side (15) with an axially parallel joint through (12) whose substantially spaced-apart side edges (13, 14) define two spaced-apart lines of contact for the associated pin bolt (6).

4. The plate chain according to claim 3, **characterized in that** the joint trough (12) extends over the entire length of the sleeve (9).

5. The plate chain according to claim 3 or 4, **characterized in that** the side edges (13, 14) of the joint trough (12) extend in parallel with each other.

6. The plate chain according to claims 3 to 5, **characterized in that** the joint trough (12) has a cross section in the form of the segment of a circle.

7. The plate chain according to claims 3 to 6, **characterized in that** the joint trough (12) has a depth (T) of 5 µm to 25 µm, preferably about 10 µm.

8. The plate chain according to any one of claims 3 to 7, **characterized in that** the side edges (13, 14) of the joint trough (12) are arranged relative to the axis (A) of the sleeve (9) at an angle (α) of 90° to 160°, preferably about 140°, with respect to each other.

9. The plate chain according to any one of claims 3 to 8, **characterized in that** the joint trough (12) is arranged in symmetry with the main pulling direction of the chain at the pulling side (15).

10. A method for producing a plate chain (1) according to any one of claims 1 to 9, wherein a sleeve (9) is wound by means of a rolling process from a sheet material and a joint trough (12) is incorporated at the pulling side (15) of the sleeve (9).

11. The method according to claim 10, **characterized in that** the joint trough (12) is incorporated after the joining of an inner chain link (3).

12. The method according to claim 10 or 11, **characterized in that** the joint trough (12) is incorporated by means of a drawing punch which is movable into the sleeve (9).

## Revendications

1. Chaîne à maillons comportant des éléments extérieurs et intérieurs (2, 3) de la chaîne, qui sont reliés entre eux au niveau de points d'articulation (10) agencés sous la forme de paliers lisses, dans laquelle chaque point d'articulation (10) est formé par une douille (9) de l'élément intérieur (3) de la chaîne et par un goujon (6), qui tourne dans la douille (9) sensiblement autour de son axe (A), de l'élément extérieur (2) de la chaîne, **caractérisée en ce qu'**au moins une partie de la surface enveloppe du goujon (6) et une partie associée de la surface (11) de la douille (9) comportent, sur le côté de traction (15), des contours périphériques qui diffèrent l'un de l'autre de telle sorte qu'un appui du goujon (6) sur la douille (9) s'effectue sur le côté de traction (15) en au moins deux points ou lignes de contact qui sont distant(e)s l'un(e) de l'autre sur la périphérie.

2. Chaîne à maillons selon la revendication 1, **caractérisée en ce que** le goujon (6) possède une section transversale de forme sensiblement circulaire et que la douille (9) possède une section transversale intérieure de forme sensiblement circulaire, adaptée à la précédente, au moins un renfoncement étant prévu en supplément dans la surface enveloppe du goujon (6) et/ou dans la surface intérieure (11) de la douille (9), sur le côté de traction (15).

3. Chaîne à maillons selon la revendication 1 ou 2, **caractérisée en ce que** la surface intérieure (11) de la douille (9) comporte, sur le côté de traction (15), une auge d' articulation (12) parallèle à l'axe, dont les bords latéraux (13, 14) essentiellement distants l'un de l'autre, définissent deux lignes de contact distantes l'une de l'autre pour les goujons associés (6).

4. Chaîne à maillons selon la revendication 3, **caractérisée en ce que** l'auge d'articulation (12) s'étend sur toute la longueur de la douille (9).

5. Chaîne à maillons selon la revendication 3 ou 4, **caractérisée en ce que** les bords latéraux (13, 14) de l'auge d'articulation (12) sont parallèles entre eux.

6. Chaîne à maillons selon les revendications 3 à 5, **caractérisée en ce que** l'auge d'articulation (12) possède une section transversale en forme de segment de cercle.

7. Chaîne à maillons selon les revendications 3 à 6, **caractérisée en ce que** l'auge d'articulation (12) possède un profondeur (T) comprise entre 5 µm et 25 µm et égale de préférence à environ 10 µm.

8. Chaîne à maillons selon les revendications 3 à 7, **caractérisée en ce que** les bords latéraux (13, 14) de l'auge d'articulation (12) sont disposés en étant séparés par un angle (α) compris entre 90° et 160° et égal de préférence à 140°, par rapport à l'axe (A) de la douille (9).

9. Chaîne à maillons selon l'une des revendications 3 à 8, **caractérisée en ce que** l'auge d'articulation (12) est disposée symétriquement par rapport à la direction de traction principale de la chaîne, sur le côté de traction (15).

10. Procédé pour fabriquer une chaîne à maillons (1) selon l'une des revendications 1 à 9, dans lequel une douille (9) est formée par enroulement, au moyen d'un processus de roulage, avec un matériau en tôle, et qu'une auge d'articulation (12) est usinée sur le côté de traction (15) de la douille (9) .

11. Procédé selon la revendication 10, **caractérisé en ce que** l'usinage de l'auge d'articulation (12) s'effectue après l'assemblage de l'élément intérieur (3) de la chaîne.

12. Procédé selon la revendication 10 ou 11, **caractérisé en ce que** l'usinage de l'auge d'articulation (12) s'effectue à l'aide d'un poinçon d'estampage pouvant être inséré dans la douille (9).
